# EUROPEAN PATENT APPLICATION

(11) **EP 1 584 529 A1**
(43) Date of publication of application: **12.10.2005**
(21) Application number: 05007286.7
(22) Date of filing: 04.04.2005
(51) Int. Cl.: B60T 3/00

(54) **Means for supporting a vehicle tyre in order to prevent flattening of the tyre**

(30) Priority: 06.04.2004 NL 1025888
(71) Applicant: MO-BI Hekwerk B.V., NL-5971 NG Grubbenvorst (NL)
(72) Inventor: Kurstjens, Josef G. L., NL-5971 Grubbenvorst (NL)
(74) Representative: Bleukx, Lucas Lodewijk M.

(57) **Abstract**

Means for supporting a tyre of a vehicle or suchlike, said means comprising a plate-like part that is essentially non-deformable and that is curved with a radius of curvature corresponding with the outer radius of the tyre to be supported. The curved longitudinal edges of the curved plate may possibly be provided with a rod which connects points close to each end of the longitudinal edge with each other

## Description

The invention relates to a means for supporting a tyre for vehicles or suchlike.

It is generally known that when vehicles such as cars and more particularly mobile homes are at a standstill for a longer period of time, the tyre easily become deformed and this deformation can take on a permanent nature. Indeed, in normal circumstances when the vehicle is parked on a flat surface the contact surface between the tyre and the ground is so small and the pressure sufficiently great to bring about some deformation of the tyre, whereby the outer circumference of the tyre becomes deformed at this point. If this situation continues for a long time this deformation can become permanent, making the tyre unusable and it has to be replaced.

The same problem occurs in the case of caravans and other types of trailer which are often not used for a long time and are therefore disposed to this type of deformation.

The aim of this invention is to create a means with which the above problem can be avoided to a large extent or does even not occur at all.

The aim is achieved in accordance with the invention in that the means comprise a plate section which is essentially non-deformable and is of a curved shape with a curvature radius corresponding to the outer radius of the tyre to be supported.

Using these means the contact surface between the outer circumference of the tyre and the plate-shaped section is increased so that the specific pressure falls sufficiently so that permanent deformation of the outer circumference of the type does not occur. Whereas in normal circumstances the contact between the ground and the outer circumference of the tyre is generally of a linear contact type, with the means the contact surface with the outer circumference is considerably increased.

Other features and characteristics of the invention become clear from the following description, with reference being made to the attached drawings in which:
- Fig.1: shows a top view of a form of embodiment of the means according to the invention and
- Fig.2: shows a schematic cross-section of the means in accordance with line II-II in figure 1.

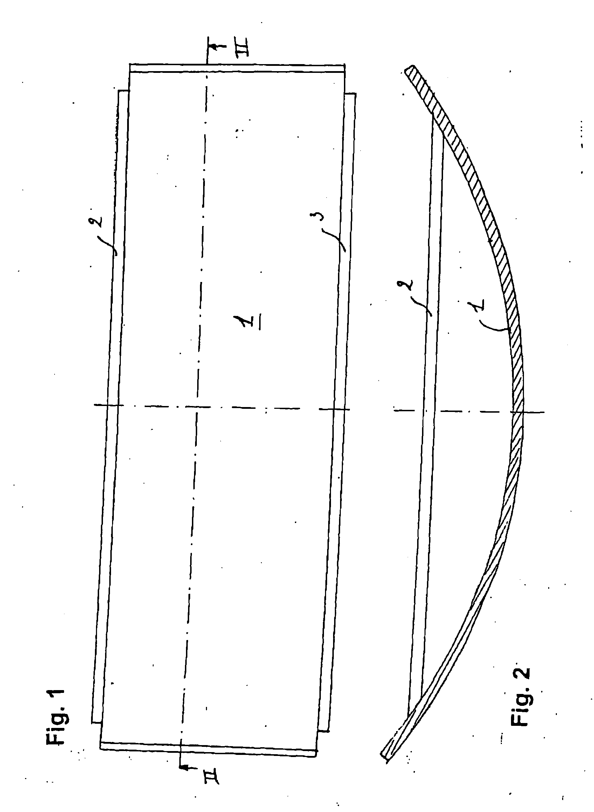

As shown in figures 1 and 2, the means according to the invention comprise a rectangular plate 1 which in the longitudinal direction is of a curved shape. The radius of curvature is selected so that it more or less corresponds with the outer diameter of the tyre which is to be supported by the means.

If the curved plate 1 is sufficiently rigid in itself, for example, through the thickness being sufficiently great and the material is correctly selected, e.g. steel, the curved plate is in itself suitable for use as the means in accordance with the invention. A precondition is that the supporting arc length is sufficiently large to prevent the tyre being locally deformed. The weight of the vehicle is then distributed over a sufficiently large area of the outer circumference of the type and is transferred via the curved plate 1 to the support surface on which the vehicle is parked.

The means can be very easily applied in that for each wheel of the vehicle that has to be supported, a curved plate 1 is put in position with the longitudinal direction of the plate 1 orientated in a direction which corresponds with the surface perpendicular to the axis line of the tyre and the vehicle is then driven forwards over a distance that is more or less equal to half the length of the curved plate. In this way the curved plate 1 is automatically in the correct position under each tyre of the vehicle. The means can be removed in a similar way by driving the vehicle forwards over a distance of at least half the length of the plate 1, which releases the plate 1 from the tyre.

In practice it is desirable to use thinner plates in order to save weight and to make the means easier to handle. For this, two points located close to each end of a curved longitudinal edge of the plate 1 can be connected to each other by way of a rod 2 which has sufficient tensile strength to keep the plate 1 in the correct shape. The best results are obtained if the rod 2 connects the ends points of the curved edge with each other. If necessary both longitudinal edges of the plate 1 can be provided with such rods 2 and 3.

Instead of rods 2 and 3, circle sectors can be used which are fastened to the curved longitudinal edges of the plate 1. The rods 2, 3 or the circle sectors can be connected to the curved side edges with suitable means, such as welds, screws or suchlike.

In order to achieve even greater weight savings it is possible to provide the plate 1 with perforations. It has been found that the supporting effect of the plate is not essentially influenced by this provided that the perforations are not made too large, with the inherent rigidity of the rubber of the tyres being used.

Experimentally it has been shown that the curved tyre length to be supported is at least equal to 20 degrees, preferably equivalent to at least 30 degrees of the circumference of the tyre.

It is clear that the invention is not restricted to the described and illustrated form of embodiment, but that within the framework of the claims numerous modifications can be made without deviating from the concept of the invention.

## Claims

1. Means for supporting a tyre of a vehicle or suchlike, **characterised in that** the means comprises a plate-like part that is essentially non-deformable and that is curved with a radius of curvature corresponding with the outer radius of the tyre to be supported.

2. Means according to claim 1, **characterised in that** the plate-shaped part consists of a metal plate with a thickness that is sufficient to maintain the non-deformability.

3. Means according to claim 1, **characterised in that** the plate-shaped part comprises a metal plate whereby two points at a distance from each other on at least one curved edge of the plate are connected to each other with a rod.

4. Means according to claim 3, **characterised in that** at least one of the points on the curved edge of the plate coincides with the end of the edge.

5. Means according to claim 1, **characterised in that** the plate-shaped part consists of a metal plate, to at least one curved edge of which a plate in the form of a circle sector is attached.

6. Means according to any one of the preceding claims, **characterised in that** the arc length of the curved plate-shaped part is equivalent to at least 20 degrees, preferably at least 30 degrees.

7. Means according to any one of the above claims, **characterised in that** the plate is provided with perforations.
